# EUROPÄISCHE PATENTSCHRIFT

(11) **EP 3 892 869 B1**
(45) Veröffentlichungstag und Bekanntmachung des Hinweises auf die Patenterteilung: **16.03.2022**
(21) Anmeldenummer: 20169030.2
(22) Anmeldetag: 09.04.2020
(51) Int. Cl.: F16B 25/00, F16B 33/00, F16B 35/04, F16B 35/06, H01R 4/30, H01R 11/28, H01R 13/44

(54) **BEFESTIGUNGSSCHRAUBE, ELEKTRISCHER STECKVERBINDER UND ELEKTRISCHE STECKVERBINDUNG**
FASTENING SCREW, ELECTRICAL CONNECTOR AND ELECTRICAL CONNECTION
VIS DE FIXATION, CONNECTEUR ENFICHABLE ÉLECTRIQUE ET RACCORD ENFICHABLE ÉLECTRIQUE

(43) Veröffentlichungstag der Anmeldung: 13.10.2021
(73) Patentinhaber: Rosenberger Hochfrequenztechnik GmbH & Co. KG, 83413 Fridolfing (DE)
(72) Erfinder: Blakborn, Willem, 83334 Inzell (DE)
(74) Vertreter: Lorenz, Markus

(56) Entgegenhaltungen:
- EP-A1- 3 389 146
- CN-A- 109 524 835
- DE-A1-102015 221 471
- DE-B3-102014 012 320
- DE-U1-202018 100 111

## Beschreibung

Die Erfindung betrifft eine Befestigungsschraube, insbesondere für einen elektrischen Steckverbinder, umfassend einen elektrisch isolierenden Isolierkörper und einen aus einem Metall ausgebildeten Metallkörper mit einem Außengewinde.

Die Erfindung betrifft ferner einen elektrischen Steckverbinder, aufweisend ein elektrisch isolierendes Steckverbindergehäuse, ein Kontaktelement und eine Befestigungsschraube.

Die Erfindung betrifft außerdem eine elektrische Steckverbindung, aufweisend einen elektrischen Steckverbinder und einen elektrischen Gegensteckverbinder.

Aus der Elektrotechnik sind verschiedene elektrische Steckverbinder bekannt. Elektrischen Steckverbinder dienen bekanntermaßen dazu, elektrische Versorgungssignale und/oder Datensignale an korrespondierende Gegensteckverbinder zu übertragen. Bei einem Steckverbinder bzw. Gegensteckverbinder kann es sich um einen Stecker, einen Einbaustecker, eine Buchse, eine Kupplung oder einen Adapter handeln. Die im Rahmen der Erfindung verwendete Bezeichnung "Steckverbinder" bzw. "Gegensteckverbinder" steht stellvertretend für alle Varianten.

Besondere Anforderungen an elektrische Steckverbinder werden insbesondere im Hochvoltbereich gestellt. Hochvoltsteckverbinder werden im Fahrzeugbereich vor allem bei Elektro- und/oder Hybridfahrzeugen eingesetzt, um eine Fahrzeugbatterie mit Ladestrom zu versorgen oder um die gespeicherte Energie aus der Batterie zu entnehmen und dem elektrischen Antrieb zuzuführen. Die elektrische Steckverbindung muss dabei dauerhaft und sicher ein Eindringen von Feuchtigkeit und Verunreinigungen verhindern und eine einwandfreie Übertragung hoher Ströme bei vorzugsweise geringer Transferimpedanz gewährleisten.

Da die leitfähigen Kontaktelemente der elektrischen Steckverbindung während des Betriebs und mitunter auch während der Montage mit hohen Spannungen beaufschlagt sein können, ist es in der Regel vorgesehen, die Kontaktelemente der Steckverbindung bzw. des Steckverbinders und/oder des Gegensteckverbinders mit nicht leitfähigen Gehäusekomponenten zu umgeben, um zu verhindern, dass ein solches Kontaktelement von einem menschlichen Finger oder einem Werkzeug unbeabsichtigt berührt werden kann. Ein Berührschutz sollte dabei in erster Linie sicher sein. Er muss aufgrund der Massentauglichkeit der Steckverbindung aber auch einfach und kostengünstig herstellbar sein.

Insbesondere leitfähige Komponenten bzw. Kontaktelemente der Steckverbindung, die im Rahmen der Montage zunächst noch zugänglich sein müssen, wie beispielsweise elektrisch leitfähige Befestigungsschrauben (insbesondere "Pins"), können in der Regel nur mit hohem konstruktivem Aufwand gegen unbeabsichtigte Berührung gesichert werden.

Beispielsweise ragt eine Befestigungsschraube bzw. ein Pin naturgemäß mit einem Schaft bzw. einem spitzen Ende in Montagerichtung aus dem zu befestigenden Bauteil heraus, um im Rahmen der Montage in einer komplementären Vertiefung, beispielsweise einer Schraubenmutter, verschraubt zu werden. Ein Berührschutz an dem Schaft einer Befestigungsschraube muss in der Regel an den Seitenflächen und außerdem auch stirnseitig bereitgestellt werden und darf gleichzeitig die Verschraubbarkeit der Befestigungsschraube nicht blockieren.

Ergänzend ist es häufig erforderlich, auch den Schraubenkopf der Befestigungsschraube zumindest nach der Montage ebenfalls gegen eine unbeabsichtigte Berührung zu sichern.

Zur Bereitstellung eines Berührschutzes eines spitzen Endes eines vollständig leitfähigen Pins bzw. einer vollständig leitfähigen Befestigungsschraube eines Steckverbinders wird beispielsweise in der US 10,205,274 B2, in der EP 3 389 146 A1, in der DE 20 2018 100 111 U1, in der CN 109 524 835 A und in der gattungsgemäßen DE 10 2014 012 320 B3 vorgeschlagen, eine isolierende Schutzkappe auf das zur Verschraubung vorgesehene, spitze Ende des Pins stirnseitig aufzusetzen, um zumindest das spitze Ende des Pins abzudecken. Hierdurch kann eine unbeabsichtigte, stirnseitige Berührung des Pins blockiert werden. Um gleichzeitig auch einen geeigneten seitlichen Berührschutz entlang des Schafts des Pins bereitzustellen, sind weitere Isolierschutzelemente erforderlich, die den Pin in radialem Abstand rundherum umgeben. Die Isolierschutzelemente beispielsweise der US 10,205,274 B2 und der EP 3 389 146 A1 ragen hierfür als einzelne Stege aus einem Steckverbindergehäuse heraus. Ergänzend zu dem Berührschutz im Bereich des Schraubenschafts ist in der US 10,205,274 B2 und der EP 3 389 146 A1 eine weitere Schutzkappe für den Schraubenkopf vorgesehen. Der Aufbau des in der US 10,205,274 B2 und in den weiteren vorstehend genannten Veröffentlichungen vorgeschlagenen Steckerbinders ist damit äußerst komplex. Der Steckverbinder ist damit nur vergleichsweise aufwändig herstellbar.

In Anbetracht des bekannten Stands der Technik besteht die Aufgabe der vorliegenden Erfindung darin, eine Befestigungsschraube bereitzustellen, die insbesondere einen besonders sicheren Berührschutz für elektrisch leitfähige Komponenten gewährleistet und sich damit vorzugsweise zur Verwendung mit einem Steckverbinder, insbesondere mit einem Hochvolt-Steckverbinder, vorteilhaft eignen kann.

Der vorliegenden Erfindung liegt auch die Aufgabe zugrunde, einen elektrischen Steckverbinder bereitzustellen, der insbesondere einen besonders sicheren Berührschutz für elektrisch leitfähige Komponenten aufweist und sich damit vorzugsweise zur Verwendung als Hochvolt-Steckverbinder vorteilhaft eignen kann.

Schließlich ist es auch Aufgabe der Erfindung, eine elektrische Steckverbindung bereitzustellen, die insbesondere einen besonders sicheren Berührschutz für elektrisch leitfähigen Komponenten aufweist und sich damit vorzugsweise zur Verwendung als Hochvolt-Steckverbindung vorteilhaft eignen kann.

Die Aufgabe wird für die Befestigungsschraube mit den in Anspruch 1 aufgeführten Merkmalen gelöst. Hinsichtlich des elektrischen Steckverbinders wird die Aufgabe durch die Merkmale des Anspruchs 12 gelöst. Für die elektrische Steckverbindung wird die Aufgabe durch Anspruch 14 gelöst.

Die abhängigen Ansprüche und die nachfolgend beschriebenen Merkmale betreffen vorteilhafte Ausführungsformen und Varianten der Erfindung.

Es ist eine Befestigungsschraube vorgesehen, insbesondere für einen elektrischen Steckverbinder, umfassend einen elektrisch isolierenden Isolierkörper und einen aus einem Metall ausgebildeten Metallkörper mit einem Außengewinde.

Der Metallkörper kann vorzugsweise hülsenförmig ausgebildet sein. Der Metallkörper kann beispielsweise als Gewindehülse ausgebildet sein. Vorzugsweise ist der Metallkörper als Bestandteil des Schraubenschafts der Befestigungsschraube ausgebildet.

Die Befestigungsschraube kann auch als Pin bzw. Stiftkontakt (insbesondere für einen elektrischen Steckverbinder) bezeichnet werden.

Die Befestigungsschraube kann insbesondere in ihrem Schaftbereich einen hülsenförmigen Abschnitt aus Metall mit dem Außengewinde aufweisen.

Durch den Metallkörper bzw. das metallische Außengewinde des Metallkörpers kann eine Schraubverbindung mit einem ausreichenden Festhaltemoment mit einem komplementären Innengewinde einer Schraubenmutter (insbesondere mit einer Schraubenmutter eines Gegensteckverbinders) realisiert werden.

Der Metallkörper kann beispielsweise Kupfer, Aluminium und/oder Gold umfassen. Grundsätzlich kann aber ein beliebiges Metall oder eine beliebige Metalllegierung vorgesehen sein, um ein ausreichendes Drehmoment, insbesondere Festhaltemoment, realisieren können. Optional kann das Metall des Metallkörpers auch ausgewählt werden, um zur elektrischen Stromübertragung mit geringem elektrischem Widerstand beitragen zu können. Grundsätzlich ist es allerdings nicht unbedingt erforderlich, dass der Metallkörper auch zur Stromübertragung verwendbar ist, insbesondere wenn ein mit der Befestigungsschraube ausgestatteter Steckverbinder zusätzlich zumindest ein Kontaktelement zur Stromübertragung aufweist.

Bei dem Außengewinde kann es sich grundsätzlich um ein beliebiges Gewinde handeln. Vorzugsweise ist allerdings ein metrisches ISO-Gewinde (DIN 13-1) vorgesehen, bevorzugt ein Regelgewinde mit Nennmaß M3, M4, M5 (besonders bevorzugt), M6 oder M8. Auch andere Nennmaße oder Gewindenormen können sich allerdings gut eignen.

Bei dem Isolierkörper kann es sich insbesondere um einen Isolierkörper aus einem Kunststoff, vorzugsweise einem steifen Kunststoff bzw. Hartplastik, handeln. Als Hartplastik bezeichnete Kunststoffe können insbesondere sowohl zur Gruppe der Thermoplaste als auch der Duroplaste zählen.

Die Befestigungsschraube kann einen Schraubenkopf und einen sich ausgehend von dem Schraubenkopf in Montagerichtung erstreckenden Schraubenschaft aufweisen.

Der Schraubenkopf kann eine Schnittstelle zum Eingriff für ein Werkzeug zur Übertragung eines Drehmoments aufweisen, beispielsweise einen sogenannten Innensechskant, Innensechsrund oder Kreuzschlitz.

Erfindungsgemäß ist der Metallkörper auf dem Isolierkörper befestigt. Der Metallkörper ist vorzugsweise koaxial auf dem Isolierkörper befestigt.

Vorzugsweise verläuft der Isolierkörper zumindest abschnittsweise durch den Metallkörper bzw. ist zumindest abschnittsweise von dem Metallkörper umgeben.

Bevorzugt ist der Isolierkörper in den Metallkörper eingespritzt. Hierdurch kann eine untrennbare Verbindung zwischen dem Isolierkörper und dem Metallkörper und damit eine funktionell einteilige Befestigungsschraube bereitgestellt werden. Die Befestigungsschraube kann hierdurch besonders robust und wirtschaftlich herstellbar sein.

Besonders bevorzugt ist der Metallkörper verdrehsicher und auszugssicher auf dem Isolierkörper befestigt (formschlüssig, kraftschlüssig und/oder stoffschlüssig).

Erfindungsgemäß weist der Metallkörper ein erstes axiales Ende sowie ein dem ersten axialen Ende gegenüberliegendes, zweites axiales Ende auf, wobei das erste axiale Ende von dem Schraubenkopf der Befestigungsschraube abgewandt ist.

Das erste axiale Ende kann auch als spitzes Ende der Befestigungsschraube bzw. des Metallkörpers bezeichnet werden. Das zweite axiale Ende kann auch als flaches Ende oder Kopfende der Befestigungsschraube bzw. des Metallkörpers bezeichnet werden. Erfindungsgemäß tritt der Isolierkörper mit einem Schaftabschnitt entlang der Längsachse des Metallkörpers bzw. der Befestigungsschraube aus dem ersten axialen Ende des Metallkörpers aus.

Der aus dem Metallkörper austretende Schaftabschnitt des Isolierkörpers kann zusammen mit dem Metallkörper den Schraubenschaft der Befestigungsschraube ausbilden.

Der Schaftabschnitt des Isolierkörpers verläuft vorzugsweise ausschließlich außerhalb des Metallkörpers. Ausgehend von dem Schaftabschnitt kann sich ein Befestigungsabschnitt des Isolierkörpers durch den Metallkörper in Richtung auf den Schraubenkopf erstrecken. Der Isolierkörper umfasst entlang der Längsachse vorzugsweise zumindest den Befestigungsabschnitt und den Schaftabschnitt. Es kann somit innerhalb des hülsenförmigen Bereichs des Metallkörpers ein isolierendes Material vorgesehen sein (Befestigungsabschnitt), das entlang der Längsachse axial über den metallischen Bereich des Metallkörpers hinaus verlängert ist (Schaftabschnitt).

Dadurch, dass der von dem Metallkörper gebildete Teil des Schraubenschafts durch den aus dem Metallkörper austretenden Schaftabschnitt des Isolierkörpers weiter verlängert wird, kann in vorteilhafter Weise ein Berührschutz für den elektrisch leitfähigen Metallkörper bereitgestellt werden. Insbesondere eine unbeabsichtigte, stirnseitige Berührung des ersten axialen Endes des Metallkörpers wird durch den Schaftabschnitt blockiert.

Ergänzend zu dem Berührschutz kann das Verschrauben der Befestigungsschraube in der korrespondierenden Aufnahme bzw. Schraubenmutter (beispielsweise eines Gegensteckverbinders) für den Monteur erleichtert sein, da der verlängerte Schaftabschnitt eine Einführhilfe realisieren kann.

Dadurch, dass der erfindungsgemäße Berührschutz ohne eine separate, das spitze Ende des Pins abdeckende Schutzkappe auskommt, kann außerdem im Betrieb eine verbesserte Wärmeabführung von dem Metallkörper gewährleistet sein. Eine gute Wärmeabführung kann insbesondere dann relevant sein, wenn der Metallkörper wesentlich an der Stromübertragung beteiligt ist bzw. insbesondere wenn hohe Ströme durch den Metallkörper übertragen werden.

Des Weiteren kann ein durch den Schaftabschnitt bereitgestellter Berührschutz deutlich robuster und verlässlicher sein als eine separate Schutzkappe. Es hat sich gezeigt, dass eine Schutzkappe in der Praxis während Auslieferung, Lagerung und/oder Montage verloren gehen bzw. von dem Pin abfallen oder beschädigt werden kann.

Für die erfindungsgemäße Befestigungsschraube ist vorgesehen, dass der aus dem ersten axialen Ende des Metallkörpers austretende Schaftabschnitt einen sich ausgehend von dem ersten axialen Ende des Metallkörpers erstreckenden, axialen ersten Bereich aufweist, wobei der Außendurchmesser des axialen ersten Bereichs dem Innendurchmesser des Metallkörpers entspricht oder kleiner ist als der Innendurchmesser des Metallkörpers.

Auf diese Weise kann sichergestellt werden, dass das erste axiale Ende des Metallkörpers von dem Schaftabschnitt nicht abgedeckt wird.

Optional kann sich der axiale erste Bereich vollständig entlang des Schaftabschnitts erstrecken. Der Schaftabschnitt weist in diesem Fall keine weiteren axialen Bereiche auf, insbesondere nicht den nachfolgend genannten, zweiten Bereich.

Gemäß einer Weiterbildung der Erfindung kann vorgesehen sein, dass der aus dem ersten axialen Ende des Metallkörpers austretende Schaftabschnitt einen sich ausgehend von dem axialen ersten Bereich des Schaftabschnitts erstreckenden, axialen zweiten Bereich aufweist, wobei der Außendurchmesser des zweiten Bereichs größer ist als der Innendurchmesser des Metallkörpers.

Der Außendurchmesser des Schaftabschnitts kann somit entlang der Längsachse in Montagerichtung zunächst den ersten Bereich und anschließend den zweiten Bereich aufweisen, wobei der Außendurchmesser des Schaftabschnitts nach dem ersten Bereich vergrößert ist.

Durch den ersten Bereich ist die radiale Erweiterung des zweiten Bereichs in vorteilhafter Weise von dem ersten axialen Ende des Metallkörpers beabstandet. Hierdurch wird das erste axiale Ende des Metallkörpers von dem Schaftabschnitt nach wie vor nicht abgedeckt, wodurch eine gute Wärmeabführung von dem axialen Ende möglich bleibt. Gleichzeitig kann durch die radiale Erweiterung in dem zweiten Bereich der Berührschutz verbessert sein.

Gemäß einer Weiterbildung der Erfindung kann vorgesehen sein, dass der Außendurchmesser des axialen zweiten Bereichs kleiner ist als der Außendurchmesser des Metallkörpers.

Hierdurch kann ein Kompromiss aus einer guten Wärmeabführung und einem sicheren Berührschutz bereitgestellt werden.

Grundsätzlich kann allerdings auch vorgesehen sein, dass der Außendurchmesser des axialen zweiten Bereichs dem Außendurchmesser des Metallkörpers entspricht. Diese Varianten sind allerdings nicht bevorzugt. Obwohl auch in diesen Fällen das erste axiale Ende des Metallkörpers aufgrund des von dem axialen ersten Bereich des Schaftabschnitts bereitgestellten Luftspalts nicht abgedeckt ist, kann die Wärmeabführung, insbesondere entlang der Längsachse, verschlechtert sein.

In einer Weiterbildung der Erfindung kann vorgesehen sein, dass der axiale zweite Bereich und/oder der axiale erste Bereich des Schaftabschnitts eine oder mehrere um die Längsachse angeordnete axiale Nuten bzw. Kerben aufweist.

In einer Ausgestaltung der Erfindung kann auch vorgesehen sein, dass der axiale erste Bereich des Schaftabschnitts und/oder der axiale zweite Bereich des Schaftabschnitts als Kreiszylinder oder als Hohlzylinder ausgebildet ist oder aus mehreren um die Längsachse angeordneten Zylindersegmenten ausgebildet ist.

Ausnehmungen in dem Schaftabschnitt bzw. Segmentierungen in dem Schaftabschnitt können die Luftzirkulation bzw. Wärmeabführung weiter verbessern. Außerdem kann Material eingespart werden, ohne den Berührschutz zu verschlechtern.

In einer Weiterbildung der Erfindung kann vorgesehen sein, dass der Isolierkörper durch eine Durchgangsbohrung des Metallkörpers verläuft oder in einem sich von dem ersten axialen Ende des Metallkörpers in Richtung auf den Schraubenkopf erstreckenden Sackloch aufgenommen ist.

Besonders bevorzugt verläuft der Isolierkörper durch eine Durchgangsbohrung des Metallkörpers, da eine Durchgangsbohrung in dem Metallkörper besonders einfach realisierbar ist. Insbesondere in diesem Fall kann der Metallkörper vorteilhaft aus einem gerollten Blechteil ausgebildet sein.

In einer vorteilhaften Weiterbildung der Erfindung kann vorgesehen sein, dass der Isolierkörper mit einem Kopfabschnitt entlang der Längsachse des Metallkörpers aus dem zweiten axialen Ende des Metallkörpers herausragt. Der Isolierkörper kann damit insbesondere die drei Abschnitte "Kopfabschnitt", "Befestigungsabschnitt" und "Schaftabschnitt" aufweisen.

Dadurch, dass der Isolierkörper auch aus dem zweiten axialen Ende des Metallkörpers austritt, kann dieser ergänzend einen Berührschutz für das zweite axiale Ende des Metallkörpers bereitstellen.

In einer Weiterbildung der Erfindung kann vorgesehen sein, dass der Metallkörper im Bereich des Schraubenkopfes eine radiale Erweiterung aufweist, um eine Auflagefläche für die Befestigungsschraube auszubilden.

Der Metallkörper kann somit einen Teil des Schraubenkopfes ausbilden. Insbesondere kann der Metallkörper durch die Auflagefläche ein sogenanntes "Kinn" des Schraubenkopfes ausbilden, um die Kraftübertragung für die Befestigungsschraube zu gewährleisten.

In einer vorteilhaften Weiterbildung der Erfindung kann vorgesehen sein, dass der Schraubenkopf aus dem Isolierkörper ausgebildet ist.

Vorzugsweise kann der Isolierkörper, insbesondere der Kopfabschnitt des Isolierkörpers, zumindest teilweise den Schraubenkopf der Befestigungsschraube ausbilden.

Besonders bevorzugt bildet der Isolierkörper den wesentlichen Teil des Schraubenkopfes.

Der Isolierkörper, insbesondere der Kopfabschnitt des Isolierkörpers, kann eine Schnittstelle zum Eingreifen eines Werkzeugs zum Übertragen eines Drehmoments ausbilden. Die Schnittstelle kann beispielsweise als Innensechskant, Innensechsrund oder Kreuzschlitz ausgebildet sein.

Der Isolierkörper kann außerdem die Auflagefläche für die Befestigungsschraube ausbilden (das "Kinn" des Schraubenkopfes); ausschließlich oder gegebenenfalls ergänzend zu dem Metallkörper.

In einer vorteilhaften Weiterbildung der Erfindung kann vorgesehen sein, dass der Au-ßendurchmesser des Schraubenkopfes größer ist als der Außendurchmesser der radialen Erweiterung bzw. der Auflagefläche des Metallkörpers.

Dadurch, dass der Außendurchmesser des Schraubenkopfes, insbesondere des aus dem Isolierkörper bzw. dessen Kopfabschnitt ausgebildeten Schraubenkopfes, größer ist als der Außendurchmesser der radialen Erweiterung des Metallkörpers kann der Isolierkörper einen noch besseren Berührschutz bereitstellen. Insbesondere können durch den Schraubenkopf neben dem Metallkörper optional auch noch weitere leitfähige Komponenten eines mit der Befestigungsschraube ausgestatteten Steckverbinders (beispielsweise Kontaktelemente, Stromschienen oder elektrische Anschlüsse) gegen unbeabsichtigte Berührung geschützt werden.

In einer vorteilhaften Weiterbildung der Erfindung kann vorgesehen sein, dass der Isolierkörper das zweite axiale Ende des Metallkörpers stirnseitig abdeckt.

Hierdurch kann ein stirnseitiger Berührschutz im Bereich des (flachen), zweiten axialen Endes des Metallkörpers bereitgestellt werden oder verbessert sein.

In einer Weiterbildung der Erfindung kann vorgesehen sein, dass die Wandstärke des Metallkörpers zumindest im Bereich des Außengewindes 0,5 mm bis 2,0 mm, vorzugsweise 0,7 mm bis 1,5 mm, besonders bevorzugt 0,8 mm bis 1,2 mm und ganz besonders bevorzugt etwa 1,0 mm beträgt.

Eine ausreichende Mindestwandstärke des Metallkörpers kann von Vorteil sein, um sicherzustellen, dass die Befestigungsschraube ein ausreichendes Drehmoment, insbesondere Festhaltemoment, zu realisieren vermag. Die Wandstärke kann dabei von dem zur Ausbildung der Metallkörpers verwendeten Metall abhängen.

Die Erfindung betrifft auch ein Verfahren zur Herstellung einer Befestigungsschraube, die einen elektrisch isolierenden Isolierkörper und einen aus einem Metall ausgebildeten Metallkörper mit einem Außengewinde aufweist. Der Metallkörper weist ein erstes axiales Ende sowie ein dem ersten axialen Ende gegenüberliegendes, zweites axiales Ende auf, wobei das erste axiale Ende von einem Schraubenkopf der Befestigungsschraube abgewandt ist. Es ist vorgesehen, dass der Metallkörper derart auf dem Isolierkörper aufgebracht wird oder dass der Isolierkörper derart in den Metallkörper eingebracht wird, dass der Isolierkörper mit einem Schaftabschnitt entlang der Längsachse des Metallkörpers aus dem ersten axialen Ende des Metallkörpers austritt.

Auf diese Weise kann insbesondere eine Befestigungsschraube für einen elektrischen Steckverbinder bzw. für einen Modulverbinder bereitgestellt werden, in der ein Berührschutz integriert ist. Die Befestigungsschraube und der Berührschutz können vorteilhaft einteilig ausgebildet sein, wodurch nur geringe Lager- und Montagekosten anfallen.

Der Metallkörper kann beispielsweise aus einem flachen Blechteil ausgeformt werden. Der Metallkörper kann beispielsweise auch aus einem zylinderförmigen Metallteil gefertigt werden, das entlang der Längsachse mit einer Durchgangsbohrung oder mit einem Sackloch versehen wird.

Der Isolierkörper kann vorzugsweise mittels eines Spritzgussverfahrens in den Metallkörper eingespritzt werden.

Es kann eine besonders vorteilhafte Befestigungsschraube bereitgestellt werden, wenn der Isolierkörper derart in den Metallkörper eingebracht wird, dass das erste axiale Ende des Metallkörpers nicht von dem Isolierkörper abdeckt wird.

Die Erfindung betrifft außerdem eine vorteilhafte Verwendung einer vorstehend und nachfolgend beschriebenen Befestigungsschraube für einen elektrischen Steckverbinder. In vorteilhafter Weise kann somit eine als Kunststoffelement mit integriertem Metallgewinde ausgebildete Befestigungsschraube zur mechanischen Verbindung des Steckverbinders mit einem komplementären Gegensteckverbinder verwendet werden. Die Erfindung betrifft auch einen elektrischen Steckverbinder, aufweisend ein elektrisch isolierendes Steckverbindergehäuse, ein Kontaktelement und eine Befestigungsschraube, insbesondere eine Befestigungsschraube gemäß den vorstehenden und nachfolgenden Ausführungen. Das Kontaktelement ist in dem Steckverbindergehäuse aufgenommen und zur Kontaktierung mit einem Gegenkontaktelement eines Gegensteckverbinders stirnseitig zugänglich. Die Befestigungsschraube ist durch eine Durchgangsbohrung des Kontaktelements hindurchgeführt, um zur mechanischen Verbindung mit einem Innengewinde des Gegensteckverbinders (beispielsweise einem Innengewinde einer Schraubenmutter) verwendbar zu sein.

Der elektrische Steckverbinder kann auch als "Modulverbinder" und der Gegensteckverbinder als "Modulgegenverbinder" bezeichnet werden.

In vorteilhafter Weise kann die Befestigungsschraube des Steckverbinders einen Berührschutz bereitstellen, um eine unbeabsichtigte Berührung der Schraubenspitze bzw. des ersten axialen Endes des Metallkörpers zu blockieren.

Besonders bevorzugt wird die Endspitze bzw. das erste axiale Ende des Metallkörpers durch den Berührschutz nicht abgedeckt. Insbesondere durch einen axialen Luftspalt zwischen dem Metallkörper und einer radialen Erweiterung des aus dem Metallkörper austretenden Abschnitts des Isolierkörpers kann ein besonders vorteilhafter Berührschutz bei gleichzeitig guter Wärmeabfuhr bereitgestellt werden.

Der elektrische Steckverbinder kann einen Anschlussbereich zur Verbindung des Kontaktelements mit einer Stromschiene oder einem elektrischen Leiter einer elektrischen Leitung aufweisen. Das Kontaktelement kann im Anschlussbereich mit der Stromschiene bzw. mit dem elektrischen Leiter durch diverse stoffschlüssige Verbindungen verbunden, beispielsweise verpresst oder verschweißt sein (z. B. durch Laserschweißen, Reibschweißen, Hartlöten etc.). Der Anschlussbereich kann ein Befestigungsmittel zur Befestigung der Stromschiene oder dem Leiter der elektrischen Leitung aufweisen. Grundsätzlich kann aber auch vorgesehen sein, dass das Kontaktelement in dem Anschlussbereich nicht an der Stromschiene bzw. an dem elektrischen Leiter befestigt ist, da bereits durch die Befestigungsschraube eine ausreichend stabile Befestigung mit der Stromschiene bzw. mit dem elektrischen Leiter bereitgestellt sein kann.

Gemäß einer Weiterbildung des erfindungsgemäßen Steckverbinders kann vorgesehen sein, dass der Schaftabschnitt des Isolierkörpers derart dimensioniert ist, dass die Zugänglichkeit des Metallkörpers der Befestigungsschraube in einem vormontierten Zustand der Befestigungsschraube in dem Steckverbinder durch das Zusammenwirken des Steckverbindergehäuses und des Schaftabschnitts blockiert ist, insbesondere für einen menschlichen Finger blockiert ist.

Die axiale Länge des Schaftabschnitts kann beispielsweise im Wesentlichen der axialen Länge des Außengewindes des Metallkörpers entsprechen. Beispielsweise kann die axiale Länge des Schaftabschnitts zumindest einem Viertel der Länge des Außengewindes entsprechen, vorzugsweise zumindest einem Drittel der Länge des Außengewindes entsprechen, besonders bevorzugt zumindest der halben Länge des Außengewindes entsprechen, weiter bevorzugt zumindest zwei Drittel der Länge des Außengewindes entsprechen, noch weiter bevorzugt zumindest drei Viertel der Länge des Au-ßengewindes entsprechen, beispielsweise auch genau der Länge des Außengewindes entsprechen. Der Schaftabschnitt kann außerdem auch länger ausgebildet sein als das Außengewinde oder kürzer sein als ein Viertel der axialen Länge des Außengewindes.

Beispielsweise kann die axiale Länge des Schaftabschnitts zumindest einem Viertel der Länge des Metallkörpers entsprechen, vorzugsweise zumindest einem Drittel der Länge des Metallkörpers entsprechen, besonders bevorzugt zumindest der halben Länge des Metallkörpers entsprechen, beispielsweise auch zumindest zwei Drittel der Länge des Metallkörpers entsprechen, zumindest drei Viertel der Länge des Metallkörpers entsprechen oder genau der Länge des Metallkörpers entsprechen. Der Schaftabschnitt kann außerdem auch länger ausgebildet sein als der Metallkörper oder kürzer sein als ein Viertel der axialen Länge des Metallkörpers.

Der elektrische Steckverbinder kann optional eine Unterlegscheibe und/oder eine Schraubensicherung (beispielsweise eine Schnorrscheibe oder einen Federring) aufweisen, die zwischen der Befestigungsschraube und der Durchgangsbohrung des Kontaktelements angeordnet ist. Hierdurch können die Kraftübertragung und die Sicherheit der Verbindung, beispielsweise die Vibrationssicherheit der Steckverbindung, weiter verbessert sein.

Die Erfindung betrifft auch eine elektrische Steckverbindung, aufweisend einen elektrischen Steckverbinder, insbesondere nach den vorstehenden und nachfolgenden Ausführungen, und einen elektrischen Gegensteckverbinder. Der Gegensteckverbinder weist ein elektrisch isolierendes Gegensteckverbindergehäuse, ein Gegenkontaktelement und ein Innengewinde auf. Das Gegenkontaktelement ist in dem Gegensteckverbindergehäuse aufgenommen und zur Kontaktierung mit dem Kontaktelement des Steckverbinders stirnseitig zugänglich. Das Innengewinde ist zur mechanischen Verbindung mit dem Außengewinde des Metallkörpers der Befestigungsschraube ausgebildet.

Auf vorteilhafte Weise kann somit ein Berührschutz für eine elektrische Steckverbindung bereitgestellt werden, bei dem auf separate Berührschutzelemente verzichtet werden kann. Durch den auf den Schaftabschnitt des Isolierkörpers zurückzuführenden Berührschutz wird ein Berührschutz geschaffen, ohne dass eine Schutzkappe das spitze Ende des Metallkörpers abdeckt.

Dis erfindungsgemäße Steckverbindung kann besonders vorteilhaft innerhalb eines Fahrzeugs, insbesondere eines Kraftfahrzeugs, verwendet werden. Der Begriff "Fahrzeug" beschreibt dabei jegliches Fortbewegungsmittel, insbesondere Fahrzeuge zu Lande, zu Wasser oder in der Luft, eingeschlossen auch Raumfahrzeuge. Mögliche Einsatzgebiete sind insbesondere Hochvoltsteckverbindungen, vor allem bei Elektro- und/oder Hybridfahrzeugen.

Die erfindungsgemäße Steckverbindung eignet sich allerdings für beliebige Anwendungen innerhalb der gesamten Elektrotechnik und ist nicht auf den Einsatz in der Fahrzeugtechnik und auch nicht auf den Einsatz in der Hochvolttechnik beschränkt zu verstehen.

Merkmale, die im Zusammenhang mit der erfindungsgemäßen Befestigungsschraube beschrieben wurden, sind selbstverständlich auch für den elektrischen Steckverbinder, die elektrische Steckverbindung, das Herstellungsverfahren und die Verwendung der Befestigungsschraube vorteilhaft umsetzbar - und umgekehrt. Ferner können Vorteile, die bereits im Zusammenhang mit der erfindungsgemäßen Befestigungsschraube genannt wurden, auch auf den elektrischen Steckverbinder, die elektrische Steckverbindung, das Herstellungsverfahren und die Verwendung der Befestigungsschraube bezogen verstanden werden - und umgekehrt.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielswiese ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Die Erfindung betrifft außerdem auch eine Befestigungsschraube, umfassend einen ersten Körper und einen zweiten Körper, wobei der zweite Körper ein Außengewinde aufweist, und wobei der erste Körper mit einem Schaftabschnitt entlang der Längsachse des zweiten Körpers aus zumindest einem axialen Ende des zweiten Körpers austritt. Der erste Körper kann elektrisch isolierend oder elektrisch leitfähig ausgebildet sein. Bei dem ersten Körper kann es sich beispielsweise um den vorstehend und nachfolgend beschriebenen elektrisch isolierenden Isolierkörper handeln. Der zweite Körper kann elektrisch isolierend oder elektrisch leitfähig ausgebildet sein. Bei dem zweiten Körper kann es sich beispielsweise um den vorstehend und nachfolgend beschriebenen Metallkörper handeln. Die von Patentanspruch 1 abhängigen Patentansprüche, die weiteren Merkmale des Patentanspruchs 1 sowie die vorstehend und nachfolgend auf die Befestigungsschraube des Patentanspruchs 1 bezogenen Ausführungen stellen vorteilhafte, optionale Weiterbildungen der in diesem Absatz genannten Befestigungsschraube dar. Ferner kann sich die in den Patentansprüchen 13 bis 15 genannte Befestigungsschraube auch auf die in diesem Absatz genannte Befestigungsschraube beziehen.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: ein erstes Ausführungsbeispiel einer erfindungsgemäßen Befestigungsschraube in einer Schnittdarstellung entlang der Längsachse;
- Figur 2: die Befestigungsschraube der Figur 1 in einer perspektivischen Darstellung;
- Figur 3: ein zweites Ausführungsbeispiel einer erfindungsgemäßen Befestigungsschraube in einer Schnittdarstellung entlang der Längsachse;
- Figur 4: ein bevorzugtes Ausführungsbeispiel einer erfindungsgemäßen Befestigungsschraube in einer Schnittdarstellung entlang der Längsachse;
- Figur 5: die Befestigungsschraube der Figur 4 in einer perspektivischen Darstellung;
- Figur 6: ein erstes Ausführungsbeispiel einer erfindungsgemäßen elektrischen Steckverbindung mit einer Befestigungsschraube gemäß Figur 1 in einer Schnittdarstellung entlang der Längsachse, in einem nicht verbundenen Zustand;
- Figur 7: die Steckverbindung der Figur 6 in einer Schnittdarstellung entlang der Längsachse, in einem verbundenen Zustand;
- Figur 8: ein zweites Ausführungsbeispiel einer erfindungsgemäßen elektrischen Steckverbindung mit einer Befestigungsschraube gemäß Figur 4 in einer Schnittdarstellung entlang der Längsachse, in einem nicht verbundenen Zustand; und
- Figur 9: die Steckverbindung der Figur 8 in einer Schnittdarstellung entlang der Längsachse, in einem verbundenen Zustand.

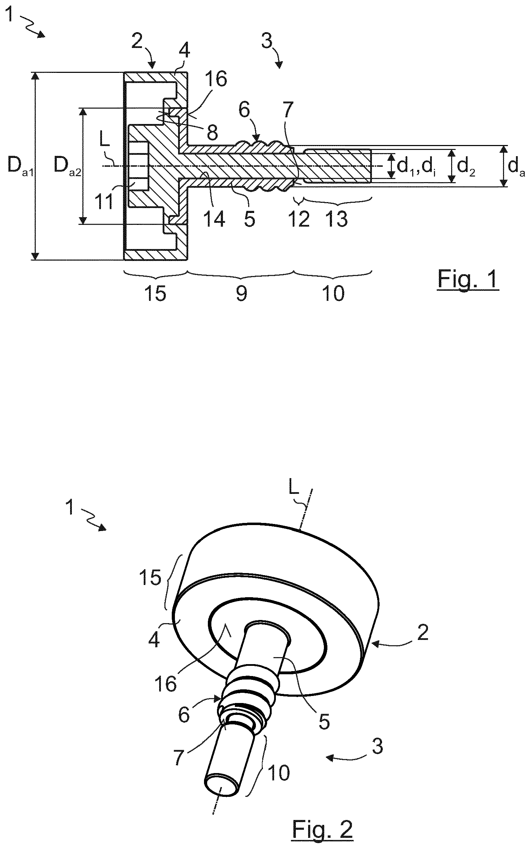

Die Figuren 1 und 2 zeigen eine Befestigungsschraube 1 gemäß einem ersten Ausführungsbeispiel der Erfindung. Die Befestigungsschraube 1 weist einen Schraubenkopf 2 und einen Schraubenschaft 3 auf.

Die Befestigungsschraube 1 umfasst einen elektrisch isolierenden Isolierkörper 4 und einen aus einem Metall ausgebildeten Metallkörper 5 mit einem Außengewinde 6. Der Metallkörper 5 ist auf dem Isolierkörper 4 befestigt und weist ein erstes axiales Ende 7 sowie ein dem ersten axialen Ende 7 gegenüberliegendes, zweites axiales Ende 8 auf. Das erste axiale Ende 7 ist als spitzes Ende des Metallkörpers 5 ausgebildet und verjüngt sich zumindest abschnittsweise konisch (dies ist allerdings nicht unbedingt erforderlich). Das axiale Ende 7 ist von dem Schraubenkopf 2 der Befestigungsschraube 1 abgewandt und damit Teil des Schraubenschafts 3.

Im Rahmen eines Verfahrens zur Herstellung der Befestigungsschraube 1 kann der Isolierkörper 4 vorzugsweise mittels eines Spritzgussverfahrens in den Metallkörper 5 eingespritzt werden. Auch andere Herstellungsverfahren sind grundsätzlich möglich; insbesondere kann aber das Spritzgießen zu einer besonders robusten und wirtschaftlich herstellbaren Befestigungsschraube 1 führen.

Der Isolierkörper 4 weist einen sich entlang der Längsachse L axial durch den Metallkörper 5 erstreckenden Befestigungsabschnitt 9 und einen aus dem ersten axialen Ende 7 des Metallkörpers 5 austretenden Schaftabschnitt 10 auf.

Der Schraubenkopf 2 der Befestigungsschraube 1 ist im Wesentlichen aus dem Isolierkörper 4 ausgebildet. Der Isolierkörper 4 weist im Bereich des Schraubenkopfes 2 eine Schnittstelle 11 zum Eingreifen eines Werkzeugs zur Beaufschlagung der Befestigungsschraube 1 mit einem Drehmoment auf. Dabei kann es sich beispielsweise um einen Innensechskant, um einen Innensechsrund, um einen Kreuzschlitz oder um eine sonstige Norm handeln.

Bei dem Außengewinde 6 kann es sich insbesondere um ein metrisches ISO-Gewinde, vorzugsweise mit Nennmaß M5, handeln.

Der aus dem ersten axialen Ende 7 des Metallkörpers 5 austretende Schaftabschnitt 10 weist in allen Ausführungsbeispielen einen sich ausgehend von dem ersten axialen Ende 7 des Metallkörpers 5 erstreckenden, axialen ersten Bereich 12 auf (vgl. Figur 1). Der Außendurchmesser d₁ des ersten Bereichs 12 entspricht dabei dem Innendurchmesser dᵢ des Metallkörpers 5.

In den in den Figuren 1 und 2 sowie 4 bis 9 gezeigten Ausführungsbeispielen weist der Schaftabschnitt 10 außerdem eine sich ausgehend von dem ersten Bereich 12 des Schaftabschnitts 10 erstreckenden, axialen zweiten Bereich 13 auf (vgl. Figur 1), wobei der Außendurchmesser d₂ des zweiten Bereichs 13 größer ist als der Innendurchmesser dᵢ des Metallkörpers 5. Auf diese Weise kann der Berührschutz weiter verbessert sein, wobei das erste axiale Ende 7 aufgrund des vor der radialen Erweiterung des zweiten Bereichs 13 angeordneten, ersten Bereichs 12 dennoch nicht von dem Isolierkörper 4 abgedeckt ist. Durch den von dem ersten Bereich 12 bereitgestellten Luftspalt kann eine vorteilhafte Belüftung und dadurch Wärmeabführung von dem Metallkörper 5 bereitgestellt werden. Um die Wärmeabführung weiter zu optimieren, kann der Außendurchmesser d₂ des zweiten Bereichs 13 vorzugsweise kleiner sein als der Außendurchmesser dₐ des Metallkörpers 5.

In den in den Figuren 1, 2 sowie 4 bis 9 dargestellten Ausführungsbeispielen verläuft der Isolierkörper 4 durch eine Durchgangsbohrung 14 des Metallkörpers 5 ausgehend von dem ersten axialen Ende 7 des Metallkörpers 5 bis zu dem zweiten axialen Ende 8 des Metallkörpers 5. Der Isolierkörper 4 ragt mit einem Kopfabschnitt 15 (vgl. z. B. Figur 1) entlang der Längsachse L des Metallkörpers 5 aus dem zweiten axialen Ende 8 des Metallkörpers 5 heraus. Dabei deckt der Isolierkörper 4 das zweite axiale Ende 8 des Metallkörpers 5 stirnseitig ab und stellt in vorteilhafter Weise auch einen Berührschutz für das zweite axiale Ende 8 des Metallkörpers 5 bereit. Dies ist allerdings optional.

Der Metallkörper 5 bildet im Bereich des Schraubenkopfes 2 eine radiale Erweiterung aus, um eine Auflagefläche 16 für die Befestigungsschraube 1 auszubilden (sogenanntes "Kinn" des Schraubenkopfes 2).

Der Außendurchmesser Dₐ₁ des Schraubenkopfes 2 bzw. des Isolierkörpers 4 kann größer sein als der Außendurchmesser Dₐ₂ der radialen Erweiterung bzw. der Auflagefläche 16 des Metallkörpers 5 (vgl. insbesondere Figur 1).

Die Wandstärke des Metallkörpers 5 kann zumindest im Bereich des Außengewindes 6 0,5 mm bis 2,0 mm, vorzugsweise 0,7 mm bis 1,5 mm, besonders bevorzugt 0,8 mm bis 1,2 mm und ganz besonders bevorzugt etwa 1,0 mm, betragen.

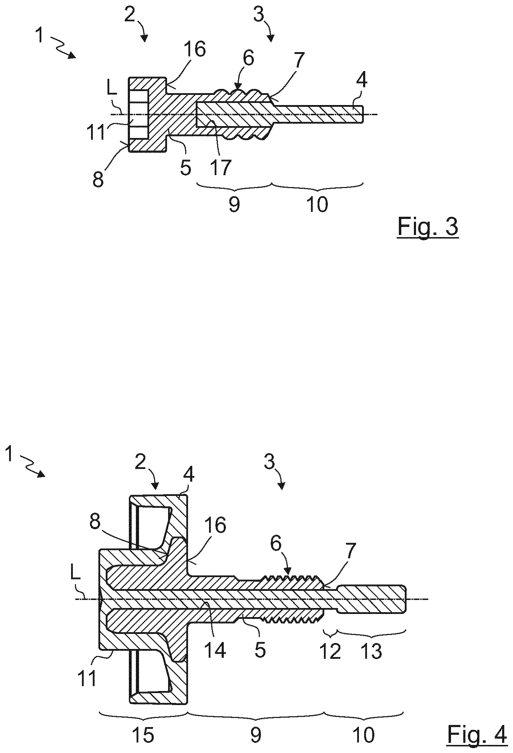

Figur 3 zeigt ein zweites Ausführungsbeispiel einer erfindungsgemäßen Befestigungsschraube 1. Die Befestigungsschraube 1 ist dabei im Wesentlichen aus dem Metallkörper 5 ausgebildet. Der Metallkörper 5 bildet vollständig den Schraubenkopf 2 der Befestigungsschraube 1 aus und weist damit auch die Schnittstelle 11 zum Eingreifen des Werkzeugs auf. Der Isolierkörper 4 ist in einem Sackloch 17 des Metallkörpers 5 aufgenommen und tritt ausschließlich mit seinem Schaftabschnitt 10 aus dem Metallkörper 5 aus. Wiederum ist eine konische Verjüngung des ersten axialen Endes 7 vorgesehen. Der konische Verlauf des spitzen, axialen Endes 7 kann optional durch den Isolierkörper 4 fortgesetzt werden, wie in Figur 3 beispielhaft gezeigt. Der Schaftabschnitt 10 und der Metallkörper 5 bilden gemeinsam den Schraubenschaft 3. Wiederum weist der Metallkörper 5 eine Auflagefläche 16 für die Befestigungsschraube 1 auf.

Im Gegensatz zum ersten Ausführungsbeispiel der Figuren 1 und 2 erstreckt sich der axiale erste Bereich 12 des Schaftabschnitts 10 vorliegend über die gesamte Länge des Schaftabschnitts 10. Ein zweiter Bereich 13 ist nicht vorgesehen.

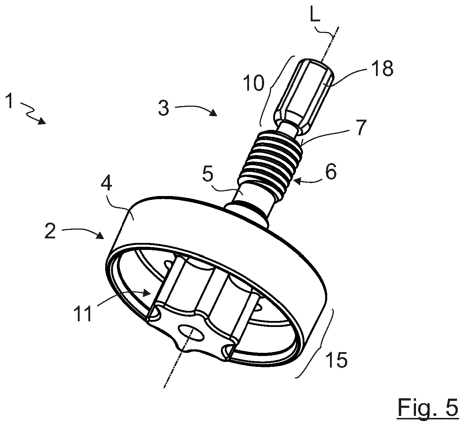

Die Figuren 4 und 5 zeigen ein bevorzugtes Ausführungsbeispiel einer erfindungsgemäßen Befestigungsschraube 1. Die Befestigungsschraube 1 ist im Wesentlichen ausgebildet wie die in den Figuren 1 und 2 dargestellte Befestigungsschraube 1, bildet jedoch im Bereich des zweiten axialen Endes 8 einen größeren Teil des Schraubenkopfes 2 aus. Im Bereich des Schraubenschaftes 3 sind stufige, konische Verjüngungen vorgesehen. Der Isolierkörper 4 kann in die Durchgangsbohrung 14 eingespritzt sein, wobei der Isolierkörper 4 mit seinem Schaftabschnitt 10 aus der Durchgangsbohrung 14 austritt, ohne jedoch das spitze, erste axiale Ende 7 des Metallkörpers 5 abzudecken. Der Metallkörper 5 kann außerdem im Bereich des zweiten axialen Endes 8 von dem Isolierkörper 4 umspritzt sein, um einen besonders geeigneten Berührschutz für den Schraubenkopf 2 bereitzustellen.

Insbesondere um die Luftzirkulation zu verbessern kann der Schaftabschnitt 10 des Isolierkörpers 4, insbesondere der axiale zweite Bereich 13 des Schaftabschnitts 10, Nuten bzw. Kerben 18 aufweisen (vgl. Figur 5). Es können beliebig viele Nuten bzw. Kerben 18 um die Längsachse L der Befestigungsschraube 1 verteilt angeordnet sein.

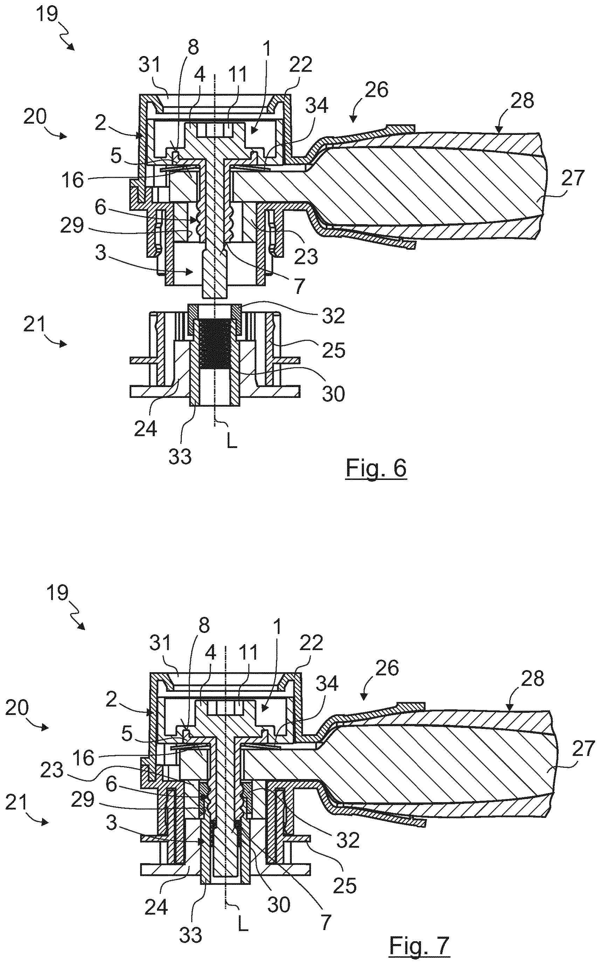

Die Figuren 6 und 7 zeigen ein erstes Ausführungsbeispiel einer elektrischen Steckverbindung 19 in nicht verbundenem Zustand (Figur 6) und in verbundenem bzw. geschlossenen Zustand (vgl. Figur 7). Die elektrische Steckverbindung 19 weist einen elektrischen Steckverbinder 20 und einen elektrischen Gegensteckverbinder 21 auf.

Der elektrische Steckverbinder 20 weist ein elektrisch isolierendes Steckverbindergehäuse 22, ein Kontaktelement 23 und eine Befestigungsschraube 1 auf. Bei der in den Figuren 6 und 7 dargestellten Befestigungsschraube 1 handelt es sich beispielhaft um die Befestigungsschraube 1 des ersten Ausführungsbeispiels der Figuren 1 und 2.

Das Kontaktelement 23 des Steckverbinders 20 ist in dem Steckverbindergehäuse 22 aufgenommen und zur Kontaktierung mit einem Gegenkontaktelement 24 des Gegensteckverbinders 21 stirnseitig zugänglich.

Der Gegensteckverbinder 21 weist ein Gegensteckverbindergehäuse 25 auf, in dem das Gegenkontaktelement 24 aufgenommen ist. Im mechanisch verbundenen Zustand der Steckverbindung 19 (vgl. Figur 7) kontaktieren sich das Kontaktelement 23 und das Gegenkontaktelement 24.

Das Kontaktelement 23 und das Gegenkontaktelement 24 können über einen Anschlussbereich 26 mit einem Innenleiter 27 einer elektrischen Leitung 28 verbunden sein.

Die Befestigungsschraube 1 ist durch eine Durchgangsbohrung 29 des Kontaktelements 23 hindurchgeführt, um zur mechanischen Verbindung mit einem Innengewinde 30 des Gegensteckverbinders 21 verwendbar zu sein.

Dadurch, dass der Außendurchmesser Dₐ₁ des aus dem Isolierkörper 4 gebildeten Schraubenkopfes 2 größer ist als der Außendurchmesser Dₐ₂ der radialen Erweiterung bzw. der Auflagefläche 16 des Metallkörpers 5 kann in vorteilhafter Weise ein Berührschutz des Kontaktelements 23 durch die zur Betätigung der Befestigungsschraube 1 vorhandene Gehäuseöffnung 31 bereitgestellt werden.

Gleichzeitig kann aufgrund des Schaftabschnitts 10 des Isolierkörpers 4 die Zugänglichkeit des Metallkörpers 5 der Befestigungsschraube 1 in einem vormontierten Zustand (vgl. Figur 6) durch das Zusammenwirken mit dem Steckverbindergehäuse 22 blockiert sein, insbesondere für einen menschlichen Finger.

Auch der Gegensteckverbinder 21 kann Maßnahmen für einen Berührschutz aufweisen, beispielsweise ein Berührschutzelement 32 zur Abdeckung der Außenwandung der das Innengewinde 30 des Gegensteckverbinders 21 aufweisenden Schraubenmutter 33.

Zur Verbesserung der Kraftübertragung und Sicherheit der Schraubverbindung kann der elektrische Steckverbinder 20 optional eine Unterlegscheibe und/oder eine Schraubensicherung 34 aufweisen, die zwischen der Befestigungsschraube 1 und der Durchgangsbohrung 29 des Kontaktelements 23 angeordnet ist.

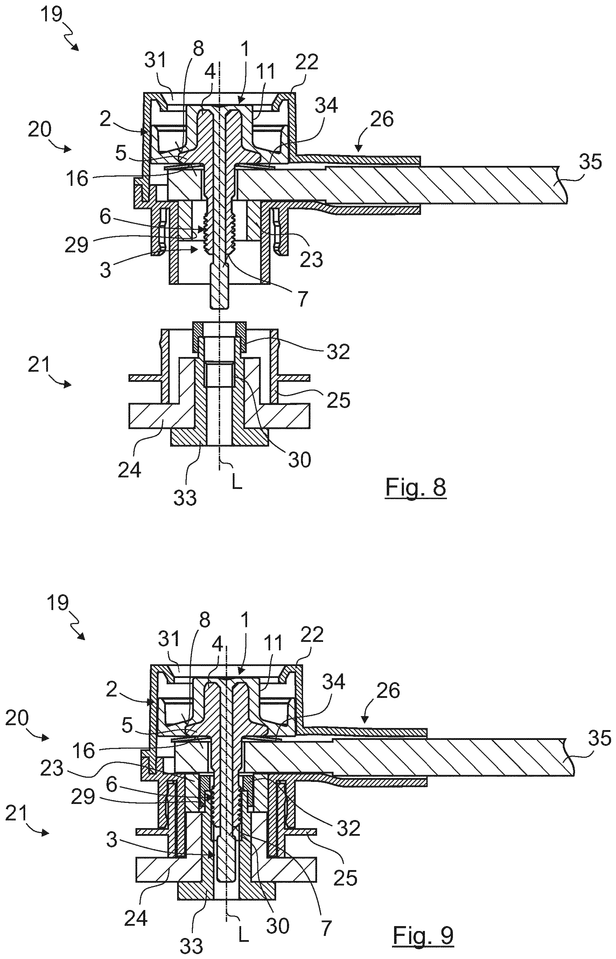

Eine elektrische Steckverbindung 19 gemäß einem bevorzugten, zweiten Ausführungsbeispiel der Erfindung ist in den Figuren 8 und 9 dargestellt, wobei die Steckverbindung 19 im Wesentlichen ausgebildet ist, wie bezüglich des ersten Ausführungsbeispiels der Figuren 6 und 7 beschrieben. Beispielhaft ist das Kontaktelement 23 des Steckverbinders 20 allerdings mit einer Stromschiene 35 über den Anschlussbereich 26 verbunden. Ferner wird beispielhaft das bevorzugte Ausführungsbeispiel der Befestigungsschraube 1 gemäß den Figuren 4 und 5 verwendet.

## Patentansprüche

1. Befestigungsschraube (1), umfassend einen elektrisch isolierenden Isolierkörper (4) und einen aus einem Metall ausgebildeten Metallkörper (5) mit einem Außengewinde (6), wobei der Metallkörper (5) auf dem Isolierkörper (4) befestigt ist und ein erstes axiales Ende (7) sowie ein dem ersten axialen Ende (7) gegenüberliegendes, zweites axiales Ende (8) aufweist, wobei das erste axiale Ende (7) von einem Schraubenkopf (2) der Befestigungsschraube (1) abgewandt ist, und wobei der Isolierkörper (4) mit einem Schaftabschnitt (10) entlang der Längsachse (L) des Metallkörpers (5) aus dem ersten axialen Ende (7) des Metallkörpers (5) austritt
**dadurch gekennzeichnet, dass**
der aus dem ersten axialen Ende (7) des Metallkörpers (5) austretende Schaftabschnitt (10) einen sich ausgehend von dem ersten axialen Ende (7) des Metallkörpers (5) erstreckenden, axialen ersten Bereich (12) aufweist, wobei der Außendurchmesser (d₁) des axialen ersten Bereichs (12) dem Innendurchmesser (dᵢ) des Metallkörpers (5) entspricht oder kleiner ist als der Innendurchmesser (dᵢ) des Metallkörpers (5).

2. Befestigungsschraube (1) nach Anspruch 1,
**dadurch gekennzeichnet, dass**
der aus dem ersten axialen Ende (7) des Metallkörpers (5) austretende Schaftabschnitt (10) einen sich ausgehend von dem axialen ersten Bereich (12) des Schaftabschnitts (10) erstreckenden, axialen zweiten Bereich (13) aufweist, wobei der Außendurchmesser (d₂) des axialen zweiten Bereichs (13) größer ist als der Innendurchmesser (dᵢ) des Metallkörpers (5).

3. Befestigungsschraube (1) nach Anspruch 2,
**dadurch gekennzeichnet, dass**
der Außendurchmesser (d₂) des axialen zweiten Bereichs (13) kleiner ist als der Außendurchmesser (dₐ) des Metallkörpers (5).

4. Befestigungsschraube (1) nach einem der Ansprüche 1 bis 3,
**dadurch gekennzeichnet, dass**
der axiale zweite Bereich (13) des Schaftabschnitts (10) eine oder mehrere um die Längsachse (L) angeordnete axiale Nuten (18) aufweist.

5. Befestigungsschraube (1) nach einem der Ansprüche 1 bis 4,
**dadurch gekennzeichnet, dass**
der Isolierkörper (4) durch eine Durchgangsbohrung (14) des Metallkörpers (5) verläuft oder in einem sich von dem ersten axialen Ende (7) in den Metallkörper (5) erstreckenden Sackloch (17) aufgenommen ist.

6. Befestigungsschraube (1) nach einem der Ansprüche 1 bis 5,
**dadurch gekennzeichnet, dass**
der Isolierkörper (4) mit einem Kopfabschnitt (15) entlang der Längsachse (L) des Metallkörpers (5) aus dem zweiten axialen Ende (8) des Metallkörpers (5) herausragt.

7. Befestigungsschraube (1) nach einem der Ansprüche 1 bis 6,
**dadurch gekennzeichnet, dass**
der Metallkörper (5) im Bereich des Schraubenkopfes (2) eine radiale Erweiterung aufweist, um eine Auflagefläche (16) für die Befestigungsschraube (1) auszubilden.

8. Befestigungsschraube (1) nach einem der Ansprüche 1 bis 7,
**dadurch gekennzeichnet, dass**
der Schraubenkopf (2) aus dem Isolierkörper (4) ausgebildet ist.

9. Befestigungsschraube (1) nach Anspruch 7 und 8,
**dadurch gekennzeichnet, dass**
der Außendurchmesser (Dₐ₁) des Schraubenkopfes (2) größer ist als der Außendurchmesser (Dₐ₂) der radialen Erweiterung des Metallkörpers (5).

10. Befestigungsschraube (1) nach einem der Ansprüche 1 bis 9,
**dadurch gekennzeichnet, dass**
der Isolierkörper (4) das zweite axiale Ende (8) des Metallkörpers (5) stirnseitig abdeckt.

11. Befestigungsschraube (1) nach einem der Ansprüche 1 bis 10,
**dadurch gekennzeichnet, dass**
die Wandstärke des Metallkörpers (5) zumindest im Bereich des Außengewindes (6) 0,5 mm bis 2,0 mm, vorzugsweise 0,7 mm bis 1,5 mm, besonders bevorzugt 0,8 mm bis 1,2 mm und ganz besonders bevorzugt etwa 1,0 mm beträgt.

12. Elektrischer Steckverbinder (20), aufweisend ein elektrisch isolierendes Steckverbindergehäuse (22), ein Kontaktelement (23) und eine Befestigungsschraube (1) gemäß einem der Ansprüche 1 bis 11, wobei das Kontaktelement (23) in dem Steckverbindergehäuse (22) aufgenommen und zur Kontaktierung mit einem Gegenkontaktelement (24) eines Gegensteckverbinders (21) stirnseitig zugänglich ist, und wobei die Befestigungsschraube (1) durch eine Durchgangsbohrung (14) des Kontaktelements (23) hindurchgeführt ist, um zur mechanischen Verbindung mit einem Innengewinde (30) des Gegensteckverbinders (21) verwendbar zu sein.

13. Elektrischer Steckverbinder (20) nach Anspruch 12,
**dadurch gekennzeichnet, dass**
der Schaftabschnitt (10) des Isolierkörpers (4) derart dimensioniert ist, dass die Zugänglichkeit des Metallkörpers (5) der Befestigungsschraube (1) in einem vormontierten Zustand der Befestigungsschraube (1) in dem Steckverbinder (20) durch das Zusammenwirken des Steckverbindergehäuses (22) und des Schaftabschnitts (10) blockiert ist, insbesondere für einen menschlichen Finger blockiert ist.

14. Elektrische Steckverbindung (19), aufweisend einen elektrischen Steckverbinder (20) nach Anspruch 12 oder 13 und einen elektrischen Gegensteckverbinder (21), wobei der Gegensteckverbinder (21) ein elektrisch isolierendes Gegensteckverbindergehäuse (25), ein Gegenkontaktelement (24) und ein Innengewinde (30) aufweist, wobei das Gegenkontaktelement (24) in dem Gegensteckverbindergehäuse (25) aufgenommen und zur Kontaktierung mit dem Kontaktelement (23) des Steckverbinders (20) stirnseitig zugänglich ist, und wobei das Innengewinde (30) zur mechanischen Verbindung mit dem Außengewinde (6) des Metallkörpers (5) der Befestigungsschraube (1) ausgebildet ist.

## Claims

1. Fastening screw (1), comprising an electrically insulating insulating body (4) and a metal body (5) formed from a metal and having an external thread (6), wherein the metal body (5) is fastened on the insulating body (4) and has a first axial end (7) and a second axial end (8) opposite the first axial end (7), wherein the first axial end (7) is remote from a screw head (2) of the fastening screw (1), and wherein the insulating body (4), by means of a shaft portion (10), emerges from the first axial end (7) of the metal body (5) along the longitudinal axis (L) of the metal body (5),
**characterized in that**
the shaft portion (10) emerging from the first axial end (7) of the metal body (5) has an axial first region (12) extending from the first axial end (7) of the metal body (5), wherein the external diameter (d₁) of the axial first region (12) corresponds to the internal diameter (d₁) of the metal body (5) or is smaller than the internal diameter (d₁) of the metal body (5).

2. Fastening screw (1) according to Claim 1,
**characterized in that**
the shaft portion (10) emerging from the first axial end (7) of the metal body (5) has an axial second region (13) extending from the axial first region (12) of the shaft portion (10), wherein the external diameter (d₂) of the axial second region (13) is greater than the internal diameter (dᵢ) of the metal body (5).

3. Fastening screw (1) according to Claim 2,
**characterized in that**
the external diameter (d₂) of the axial second region (13) is smaller than the external diameter (dₐ) of the metal body (5).

4. Fastening screw (1) according to one of Claims 1 to 3,
**characterized in that**
the axial second region (13) of the shaft portion (10) has one or more axial grooves (18) arranged around the longitudinal axis (L).

5. Fastening screw (1) according to one of Claims 1 to 4, **characterized in that**
the insulating body (4) proceeds through a through-bore (14) of the metal body (5) or is received in a blind hole (17) extending from the first axial end (7) into the metal body (5).

6. Fastening screw (1) according to one of Claims 1 to 5, **characterized in that**
the insulating body (4), by means of a head portion (15), protrudes from the second axial end (8) of the metal body (5) along the longitudinal axis (L) of the metal body (5).

7. Fastening screw (1) according to one of Claims 1 to 6, **characterized in that**
the metal body (5) has a radial widening in the region of the screw head (2) in order to form a contact face (16) for the fastening screw (1).

8. Fastening screw (1) according to one of Claims 1 to 7, **characterized in that**
the screw head (2) is formed by the insulating body (4).

9. Fastening screw (1) according to Claim 7 and 8, **characterized in that**
the external diameter (Dₐ₁) of the screw head (2) is greater than the external diameter (Dₐ₂) of the radial widening of the metal body (5).

10. Fastening screw (1) according to one of Claims 1 to 9, **characterized in that**
the insulating body (4) covers the second axial end (8) of the metal body (5) at the end face.

11. Fastening screw (1) according to one of Claims 1 to 10, **characterized in that**
the wall thickness of the metal body (5), at least in the region of the external thread (6), is 0.5 mm to 2.0 mm, preferably 0.7 mm to 1.5 mm, particularly preferably 0.8 mm to 1.2 mm and especially preferably approximately 1.0 mm.

12. Electrical plug connector (20), having an electrically insulating plug connector housing (22), a contact element (23) and a fastening screw (1) according to one of Claims 1 to 11, wherein the contact element (23) is received in the plug connector housing (22) and is accessible at the end face for making contact with a mating contact element (24) of a mating plug connector (21), and wherein the fastening screw (1) is guided through a through-bore (14) of the contact element (23) in order to be usable for mechanical connection to an internal thread (30) of the mating plug connector (21).

13. Electrical plug connector (20) according to Claim 12, **characterized in that**
the shaft portion (10) of the insulating body (4) is dimensioned in such a way that the accessibility of the metal body (5) of the fastening screw (1) in a preassembled state of the fastening screw (1) in the plug connector (20) is obstructed, in particular obstructed for a human finger, as a result of the cooperation of the plug connector housing (22) and the shaft portion (10).

14. Electrical plug connection (19), having an electrical plug connector (20) according to Claim 12 or 13 and an electrical mating plug connector (21), wherein the mating plug connector (21) has an electrically insulating mating plug connector housing (25), a mating contact element (24) and an internal thread (30), wherein the mating contact element (24) is received in the mating plug connector housing (25) and is accessible at the end face for making contact with the contact element (23) of the plug connector (20), and wherein the internal thread (30) is formed for mechanical connection to the external thread (6) of the metal body (5) of the fastening screw (1).

## Revendications

1. Vis de fixation (1) comprenant un corps isolant électriquement (4) et un corps métallique (5) constitué d'un métal avec un filetage extérieur (6), dans laquelle le corps métallique (5) est fixé sur le corps isolant (4) et présente une première extrémité axiale (7) ainsi qu'une deuxième extrémité axiale (8) opposée à la première extrémité axiale (7), la première extrémité axiale (7) étant opposée à une tête de vis (2) de la vis de fixation (1) et le corps isolant (4) sortant avec un segment de tige (10) le long de l'axe longitudinal (L) du corps métallique (5) de la première extrémité axiale (7) du corps métallique (5),
**caractérisée en ce que**
le segment de tige (10) sortant de la première extrémité axiale (7) du corps métallique (5) présente une première zone axiale (12) s'étendant à partir de la première extrémité axiale (7) du corps métallique (5), le diamètre extérieur (d₁) de la première zone axiale (12) correspondant au diamètre intérieur (dᵢ) du corps métallique (5) ou étant inférieur au diamètre intérieur (dᵢ) du corps métallique (5).

2. Vis de fixation (1) selon la revendication 1,
**caractérisée en ce que**
le segment de tige (10) sortant de la première extrémité axiale (7) du corps métallique (5) présente une deuxième zone axiale (13) s'étendant à partir de la première zone axiale (12) du segment de tige (10), le diamètre extérieur (d₂) de la deuxième zone axiale (13) étant supérieur au diamètre intérieur (dᵢ) du corps métallique (5).

3. Vis de fixation (1) selon la revendication 2,
**caractérisé en ce que**
le diamètre extérieur (d₂) de la deuxième zone axiale (13) est inférieur au diamètre extérieur (dₐ) du corps métallique (5).

4. Vis de fixation (1) selon une des revendications 1 à 3, **caractérisée en ce que**
la deuxième zone axiale (13) du segment de tige (10) présente une ou plusieurs rainures axiales (18) disposées autour de l'axe longitudinal (L).

5. Vis de fixation (1) selon une des revendications 1 à 4,
**caractérisée en ce que**
le corps isolant (4) passe à travers un trou traversant (14) du corps métallique (5) ou est reçu dans un trou borgne (17) s'étendant depuis la première extrémité axiale (7) dans le corps métallique (5).

6. Vis de fixation (1) selon une des revendications 1 à 5,
**caractérisée en ce que**
le corps isolant (4) dépasse de la deuxième extrémité axiale (8) du corps métallique (5) avec un segment de tête (15) le long de l'axe longitudinal (L) du corps métallique.

7. Vis de fixation (1) selon une des revendications 1 à 6,
**caractérisée en ce que**
le corps métallique (5) présente dans la région de la tête de vis (2) une extension radiale pour former une surface de contact (16) pour la vis de fixation (1).

8. Vis de fixation (1) selon une des revendications 1 à 7,
**caractérisée en ce que**
la tête de vis (2) est formée à partir de le corps isolant (4).

9. Vis de fixation (1) selon les revendications 7 à 8,
**caractérisée en ce que**
le diamètre extérieur (Dₐ₁) de la tête de vis (2) est supérieur au diamètre extérieur (Dₐ₂) de l'extension radiale du corps métallique corps métallique (5).

10. Vis de fixation (1) selon une des revendications 1 à 9,
**caractérisée en ce que**
le corps isolant (4) recouvre frontalement la deuxième extrémité axiale (8) du corps métallique (5).

11. Vis de fixation (1) selon une des revendications 1 à 10,
**caractérisée en ce que**
l'épaisseur de paroi du corps métallique (5) est, au moins dans la région du filetage extérieur (6), de 0,5 mm à 2,0 mm, de préférence de 0,7 mm à 1,5 mm, de façon particulièrement préférée de 0,8 mm à 1,2 mm et de façon très particulièrement préférée d'environ 1,0 mm.

12. Connecteur enfichable électrique (20) comportant un boîtier de connecteur enfichable isolant électriquement (22), un élément de contact (23) et une vis de fixation (1) selon une des revendications 1 à 11, dans lequel l'élément de contact (23) est logé dans le boîtier de connecteur enfichable (22) et accessible frontalement pour entrer en contact avec un élément de contact homologue (24) d'un connecteur enfichable homologue (21), et dans lequel la vis de fixation (1) est insérée à travers un trou de passage (14) de l'élément de contact (23) pour pouvoir être utilisée pour la connexion mécanique avec un filetage intérieur (30) du connecteur enfichable homologue (21).

13. Connecteur enfichable électrique (20) selon la revendication 12,
**caractérisé en ce que**
le segment de tige (10) du corps isolant (4) est dimensionné de sorte que l'accessibilité du corps métallique (5) de la vis de fixation (1), lorsque la vis de fixation (1) est prémontée dans le connecteur enfichable (20), est bloquée par l'interaction du boîtier de connecteur enfichable (22) et du segment de tige (10), en particulier pour un doigt humain.

14. Raccord enfichable électrique (19) comportant un connecteur enfichable électrique (20) selon la revendication 12 ou 13 et un connecteur enfichable électrique homologue (21), dans lequel le connecteur enfichable électrique homologue (21) comporte un boîtier de connecteur enfichable homologue isolant électriquement (25), un élément de contact homologue (24) et un filetage intérieur (30), dans lequel l'élément de contact homologue (24) est logé dans le boîtier de connecteur enfichable homologue (25) et est accessible frontalement pour entrer en contact avec l'élément de contact (23) du connecteur enfichable (20), et dans lequel le filetage intérieur (30) est configuré pour la connexion mécanique avec le filetage extérieur (6) du corps métallique (5) de la vis de fixation (1).
